# EUROPEAN PATENT APPLICATION

(11) **EP 4 814 740 A1**
(43) Date of publication of application: **30.09.2026**
(21) Application number: 26164209.4
(22) Date of filing: 12.03.2026
(51) Int. Cl.: G06F 16/242, G06F 16/21, G06N 5/00

(54) **MEDIA ITEM GRAPH DATABASE**

(30) Priority: 20.03.2025 US 202519085335
(71) Applicant: Microsoft Technology Licensing, LLC, Redmond, WA 98052 (US)
(72) Inventor: NIR, Oron, Redmond, Washington, 98052 (US); ALBURQUERQUE, Michael Tony, Redmond, Washington, 98052 (US); LEVI, Avner, Redmond, Washington, 98052 (US); AMRAM, Shay, Redmond, Washington, 98052 (US); BERTENTAL, Guy Haim, Redmond, Washington, 98052 (US); STRUGO, Eliyahu, Redmond, Washington, 98052 (US); AZAIZA, Nadim, Redmond, Washington, 98052 (US); HEJNA, Donald Joseph, JR., Redmond, Washington, 98052 (US)
(74) Representative: CMS Cameron McKenna Nabarro Olswang LLP

(57) **Abstract**

In various examples there is a computer-implemented method, comprising ingesting into a memory a batch of media items. Duplicate media items in the batch are identified. For each duplicate media item, the duplicate media item is ranked with respect to duplicates of the media item. Filtering the duplicate media items is performed using the ranks of the duplicate media items to obtain filtered media items. Metadata of individual ones of the filtered media items is computed. Individual ones of the filtered media items are labelled with part of the metadata. For each filtered media item having metadata and a label, input into a Large Language Model, LLM, the media item, the label, the metadata and a request, and receive from the LLM a description of content depicted in the media item. A graph database of the filtered media items is created using the descriptions, the metadata, and the labels.

## Description

### BACKGROUND

Modem day technology allows for hundreds of thousands of media items, such as videos, digital photographs and images, audio recordings and other media items to be digitally stored at any given time on a device or in a store accessible to the device. Often, there arises a need for the retrieval of media items depicting a specific event, location, person or action, or any other information related to the media item. Searching through these media items to locate the required information is often a time-consuming and complex task.

The embodiments described below are not limited to implementations which solve any or all of the disadvantages of known media item database technology.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

By constructing a graph database to store media items and associated metadata it is possible to facilitate a variety of tasks including but not limited to retrieval augmented generation, RAG.

In various examples there is a computer-implemented method, comprising ingesting into a memory a batch of media items. For a media item of the batch of media items, duplicate media items in the batch are identified. For each duplicate media item, the duplicate media item is ranked with respect to duplicates of the media item. Filtering the duplicate media items is performed using the ranks of the duplicate media items to obtain filtered media items. Metadata of individual ones of the filtered media items is computed. Individual ones of the filtered media items are labelled with part of the metadata. For each filtered media item having metadata and a label, input into a Large Language Model, LLM, the media item, the label, the metadata and a request, and receive from the LLM a description of content depicted in the media item. A graph database of the filtered media items is created using the descriptions, the metadata, and the labels.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 is a schematic diagram of a media item analysis tool deployed in a communications network;
FIG. 2 is a schematic diagram of a media item analysis tool such as that of FIG. 1;
FIG. 3 is a flow diagram of an example method of computing metadata of a media item;
FIG. 4 is a flow diagram of an example method of constructing and storing a graph database;
FIG. 5 is a flow diagram of an example method of constructing a graph database;
FIG. 6 is a flow diagram of an example method for querying a graph database;
FIG. 7 is an example schema of a graph database such as those of FIGs 4-6;
FIG. 8 shows an example user interface of a chatbot of a media item analysis tool;
FIG. 9 shows an example user interface of a media item analysis tool;
FIG. 10 shows an example use of a media item analysis tool that identifies events from media items and sorts media items by date;
FIG. 11 shows an example use of a media item analysis tool where the media item analysis tool generates and answers questions relating to media items;
FIG. 12 shows an example story creation interface of a media item analysis tool;
FIG. 13 shows an example story creation interface within a media item analysis tool;
FIG. 14 shows a flow diagram of a method of generating a story according to a user request;
FIG. 15 illustrates an exemplary computing-based device in which embodiments of a media item analysis tool are implemented.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

Media items such as videos, digital photographs, digital audio recordings or other media items are simple and efficient to capture and store using existing technologies such as smart phones, tablet computers, smart watches and other devices. A given individual may have many thousands or more of media items. Enterprises also have very large numbers of media items to be managed and there are particular application domains where media items are to be analyzed.

Tagging media items with topics and categories facilitates management of media items but often fails to capture any deeper context within media items, and therefore also fails to pick up subtle and unique relationships between media items. Using tags on media items fails to give users the option for highly detailed and specific searches; for example, users may be able to search for "photos from March 2023" but not for "photos from March 2023 where my son is playing soccer where he is scoring a goal". There exists a need for media search and retrieval tools that can allow users to input complex queries, and intelligently analyze and understand the content of media files beyond simple metadata.

By constructing a graph database to store media items and associated metadata it is possible to facilitate a variety of tasks including but not limited to retrieval augmented generation, RAG. Retrieval augmented generation is a process for prompting a Large Language Model (LLM) whereby the prompt references data from a source that is separate from the LLM. The LLM may not have been trained on the data from the source. In an example, RAG comprises generating a prompt engaging an LLM to complete a task taking into account the data from the other source. By using RAG it is possible to obtain LLM output that is specialized to the other source. In various examples, a graph database of media items is constructed and used as the "other source" when performing RAG.

Constructing a graph database of media items is not straightforward, especially where there are factors involved such as any of: a very large number of media items, individual ones of the media items are large in size, a significant number of the media items are similar such that removing duplicates or applying discriminating labels to the items is computationally complex to achieve efficiently.. In various examples, a graph database of media items is constructed in an efficient manner that results in a high quality graph database producing high performance for downstream tasks including but not limited to RAG.

In various examples there is a computer-implemented method, comprising ingesting into a memory a batch of media items. By ingesting a batch of media items (rather than processing one media item at a time), such as all media items from surveillance cameras in a building during a specified time period, it is possible to construct a graph database that will take into account relationships between the media items.

Duplicate media items in the batch are identified. Identifying duplicate media items is useful to facilitate efficiency downstream in the process. For each duplicate media item, the duplicate media item is ranked with respect to duplicates of the media item. Filtering the duplicate media items is performed using the ranks of the duplicate media items to obtain filtered media items. Filtering is useful to facilitate efficiency such as by reducing memory requirements and reducing computational load.

Metadata of individual ones of the filtered media items is computed. The metadata is useful to facilitate construction of a graph database as explained below. Individual ones of the filtered media items are labelled with part of the metadata. Having labels on the media items is found to be particularly effective to facilitate high quality graph database construction.

For each filtered media item having metadata and a label, input into a Large Language Model, LLM, the media item, the label, the metadata and a request, and receive from the LLM a description of content depicted in the media item. In this way rich descriptions of content depicted in the media items are obtained which facilitate high quality graph database construction. A graph database of the filtered media items is created using the descriptions, the metadata, and the labels. The graph database may be constructed in an efficient manner since the descriptions, metadata and labels are available. The graph database may be constructed using a LLM or other graph construction technology as described in more detail below.

Once the graph database has been constructed it may be used for RAG. In this way it is possible to benefit from the capabilities of a Large Language Model but specialized to a particular batch of media items used to construct the graph database.

In some non-limiting examples, a graph database is constructed and used to analyse media items to determine an action to be automatically triggered, such as preventing access to a cloud service, isolating a network node or other security action. In some examples the graph database is used to generate story books of videos and photographs.

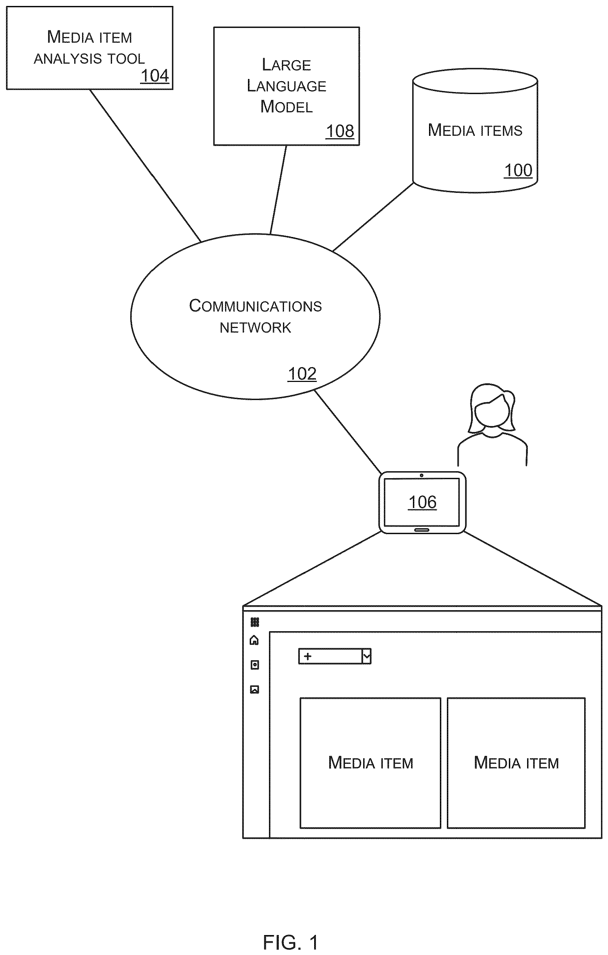

FIG. 1 illustrates schematic diagram of a media item analysis tool 104. The media item analysis tool 104 is deployed as a cloud service in FIG. 1 although this is not essential as in some cases functionality of the media item analysis tool is at an end user device or is shared between a client device and a server. The media item analysis tool has access to media items 100 and is accessible to a client device such as tablet computer 106 whereby a user may interact with the media item analysis tool 104 using a user interface as depicted in FIG. 1. In a non-limiting example a security guard is able to analyse security videos from a building. In another non-limiting example a person is able to analyse holiday photographs and videos to curate the collection of media items.

The media item analysis tool 104 has access to a Large Language Model (LLM) 108. In some cases, the LLM 108 is a multi-modal LLM. The LLM 108 is a machine learning model which may have a transformer architecture that uses a self-attention mechanism to process data. In some cases, the LLM 108 has a billion or more parameters. In some cases, the LLM 108 is trained to output a textual description of a non-text input. A non-exhaustive list of examples of LLMs which may be used is: LLaMA, GPT-4, Gemini, Mistral, PaLM 2, BLOOM, Claude, OPT. The communications network 102 is the internet, an intranet, a telecommunications network, or any other communications network.

The media item analysis tool 104 is computer implemented and comprises a user interface. FIG. 1 shows an end user device 106 with an enlarged view of a display showing the user interface. The user interface may be a graphical user interface or a spoken user interface or any other type of user interface. The media item analysis tool 104 is able to access, through the communications network 102, the LLM 108, media items 100 and a user device 106. The user device 106 may be a smart phone, a smart watch, a laptop or any other device capable of accessing the media item analysis tool 104 via the communications network 102. An end user using the user device 106 may have an account with a provider of the media item analysis tool 104 and any other related services.

The media item analysis tool 104 may be deployed on a on-premise server, a server on a data centre, a public cloud, a private cloud or any other computing entity connected to communications network 102. In some cases, the functionality of the media item analysis tool 104 is distributed between more than one computing entity.

Media items 100 are photos, videos, audio recordings or any other media items. Media items 100 may be stored on a cloud storage, external hard drives, local servers, external servers or any other storage capable of storing media items.

The media item analysis tool 104 has functionality to create a graph database from media items 100 and enable RAG functionality with the graph database to achieve a wide range of applications. The media item analysis tool 104 may produce a natural language description of media items 100 and/or search through and fetch media items 100 according to a user query, fetch information within media items 100 using the natural language description of the media items 100, create a chronological story of events depicted in media items 100 or create a sorted story of events depicted in media items 100 wherein the sorting is done using any suitable criteria. For example, an input query may be "Please show me all videos of me where I am wearing a red shirt" or "Please show me all instances of criminal activity within a given video". Additionally or alternatively, the media item analysis tool 104 may request a user for permission to access media items 100 stored on a user device 106 and access media items 100 automatically when requested by a user.

The media item analysis tool 104 may additionally or alternatively carry out analysis services relating to public safety and justice, social media event publication, corporate due diligence investigations, regulatory compliance audits, internal investigations of employee misconduct, forensic accounting, legal investigations or any other case where media may be used to perform an analysis.

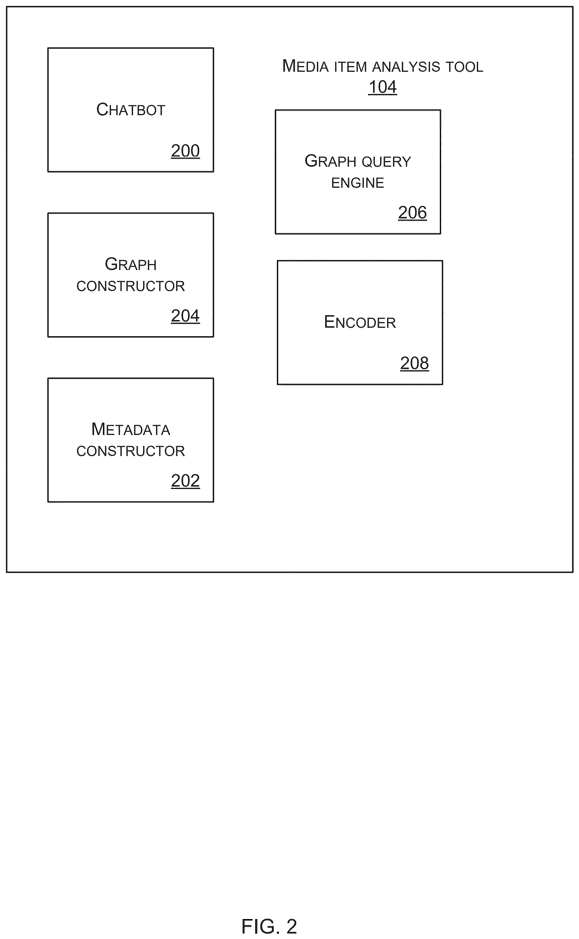

FIG. 2 is a schematic diagram of a media item analysis tool 104 such as that of FIG. 1. In one example, the media item analysis tool 104 comprises a chatbot 200, a graph constructor 204 a metadata constructor 202, a graph query engine 206 and an encoder 208.

The chatbot 200 is a computer-implemented functionality that takes in a user input as natural language and provides a natural language output to a user. In some examples the chatbot 200 uses the functionality of an LLM; that is the chat bot is a proxy between the media item analysis tool 104 and an LLM such as LLM 108 of FIG. 1 or another LLM.

The metadata constructor 202 is computer-implemented functionality that extracts metadata associated with a user input and/or media items 100. The metadata constructor 202 may utilize metadata extraction tools. A non-exhaustive list of metadata extraction tools that can be used is: ExifTool, Metadata++, Adobe Bridge, MetaDigger or any other suitable metadata extraction tool.

In some examples the metadata constructor 202 is able to compute or extract a timestamp of a media item. For example, the metadata constructor 202 may read a timestamp from a manifest of the media item or may assign a timestamp to a media item according to observation of capture events when the media item is captured.

In some examples the metadata constructor 202 comprises object recognition software to recognize objects in videos or images. In some cases the object recognition software is face recognition software.

A non-exhaustive list of metadata that may be extracted by the metadata constructor 202 is: a timestamp, a person, a location, a video transcription, item name, duration, time zone, global positioning system GPS co-ordinates, altitude, device type, device ID, camera settings, resolution, version, editing history, geospatial tags. After extracting the metadata, the metadata constructor 202 may store metadata in a metadata repository, a database or any other suitable storage formats, before sending the metadata to the Large Language Model 108. Additionally, before sending the metadata to the Large Language Model 108, the metadata constructor 202 may use the metadata to label the media items 100. In one example, the metadata constructor 202, after extracting people from a media item from the media items 100, may draw bounding boxes around the faces of the people in different colors and assign a name to each different color. Differentiating the bounding boxes via color is only one example of labelling, and any other suitable labelling method may be used. The metadata constructor 202 may send the metadata and the labelled media items to the Large Language Model 108 as input. It is found that by using labelled media items the number of edges in the graph database increases and the quality of the graph database is improved. The labels may be applied to individual pixels in the media items and this is found to improve quality of the resulting graph database.

The media item analysis tool 104 comprises a graph constructor. The graph constructor 204 has functionality to identify duplicate media items in some cases. Duplicate media items may be identified by computing pixel wise differences between pairs of media items and identifying duplicate media items as those where the differences are below a threshold. In another example, duplicate media items are identified by computing, for each media item, a color histogram and then making comparisons between the color histograms. In this case duplicate media items are those where the mean and variance of the respective color histograms are within a specified range of one another. In another example, duplicate media items are identified by computing, for each media item, a vector embedding of the media item, and identifying duplicate media items as those within a specified distance from one another in the vector space.

In one example, duplicate may refer to media identical in every aspect. In another example, duplicate may refer to media that are similar. The degree of similarity to qualify as a duplicate is controlled by setting the thresholds, specified distances in vector space, or ranges.

Duplicate media items are ranked with respect to one another. The ranking may be computed by the graph constructor sending duplicate media items to a generative machine learning model such as LLM 108 with a prompt requesting the media items be ranked according to criteria. A non-exhaustive list for criteria for ranking that may be used is: image resolution, video resolution, prevalence of visual artifacts, uniqueness of content, number of people and/or entities in the background of an image, number of people smiling. A Large Language Model may rank duplicate media automatically, or when prompted by a user. For a given ranking of duplicates of a media item, the Large Language Model may choose a highest ranked media item and discard the remaining duplicates of the media item.

The graph constructor 204 is computer-implemented functionality for building a graph database. A graph database is a plurality of nodes connected by edges. Each node represents an entity such as a media item or an entity depicted in a media item, or a timestamp. Edges between the nodes represent relationships between entities.

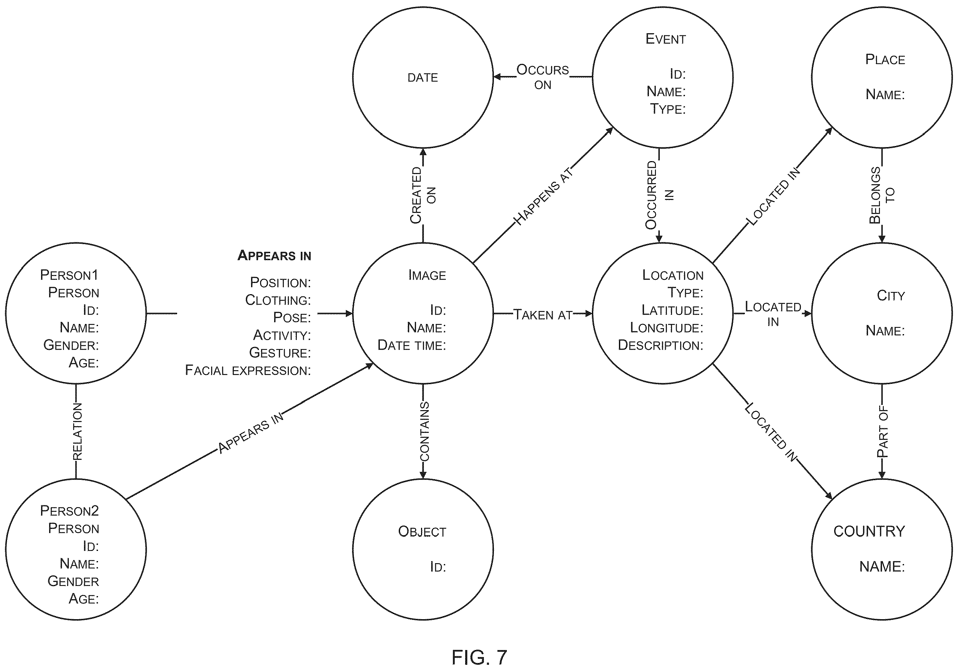

The graph constructor 204 receives as input a natural language text description of the media items 100 (i.e. the output of the Large Language Model 108), the metadata of the media items 100, the labelled media items and the highest-ranked media item for all duplicates of the media items 100 in order to build a graph database of the media items, which is further described in FIG. 7. In one example, the graph constructor 204 is GraphRAG. In some examples the graph constructor is a Large Language Model. In other examples, the graph constructor 204 is any other computer-implemented program capable of building a graph database, such as a plurality of rules about how to connect nodes according to relationships between entities expressed in the metadata, descriptions and labels.

The graph query engine 206 is computer implemented and facilitates interaction with the graph database produced by the graph constructor 204. The graph query engine 206 may deploy graph traversal methods in order to search through the graph database, find paths between nodes of the graph database, identify cycles within a graph database, identify clusters or groups within the graph database or to identify key nodes within the graph database. Examples of graph database traversal methods include shortest path detection, community detection and the use of centrality measures. Further query methods implemented by the graph query engine 206 include Text2Cypher, GraphRAG Global Search and GraphRAG Local Search in conjunction with Text2Cypher.

The encoder 208 has functionality to create embeddings. In some examples the encoder 208 is part of the graph constructor. An embedding is a numerical representation of text, images, videos and any other representation of information in a vector space. Such embeddings may comprise node embeddings, where each entity identified in the description is transformed into a vector representation which captures the entity's context in the graph database. The embeddings may additionally comprise temporal embeddings which capture temporal relationships. The encoder creates embeddings of metadata extracted by the metadata constructor 202 to be used by the graph constructor 204 in creating a graph database. Creating embeddings of metadata allows for all metadata to be represented in one space and therefore the similarities between the metadata to be visible in that space (e.g. in a continuous vector space, vectors that are closer together are more similar). Therefore, creating embeddings as part of the graph database creation process assists in forming edges between nodes and identifying relationships between the nodes.

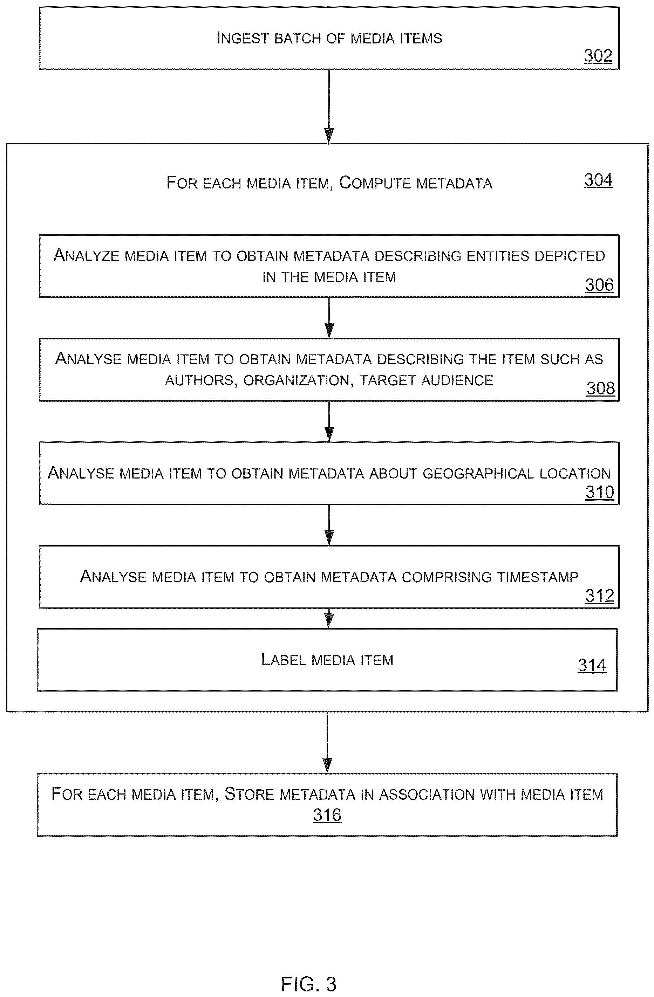

FIG. 3 is a flow diagram of an example method performed by the metadata constructor 202 of the media item analysis tool 104, such as those of FIG. 2 and FIG. 1. At block 302, a batch of media items is ingested 302 by the media item analysis tool 104. Ingesting refers to receiving as input. At block 304, for each media item of the batch, the metadata constructor 202 computes 304 metadata. The following blocks 306-312 in the figure describe a method of computing 304 metadata from a media item. One or more of blocks 306 to 312 are optional.

At block 306, the media item is analyzed 306 to obtain metadata describing entities depicted in the media item. A non-exhaustive list of metadata describing entities depicted in the media item is: people, animals, names of people, clothing of people, behavioural metadata (e.g. actions of people and any other entities). Object recognition technology may be used at block 306 such as YOLO or R-CNN or other object recognition technology. Computing metadata describing entities is particularly useful as the graph database may represent each entity or type of entity using a node of the graph.

At block 308, the media item is analyzed 308 to obtain metadata such as authors, organizations, target audience, title, item type, item size, version, language. This metadata may be extracted from a manifest of the media item.

At block 310, the media item is analyzed 310 to obtain metadata about geographical location. A non-exhaustive list of metadata about geographical location is: Global Positioning System (GPS) co-ordinates, Geographic Information System (GIS) location, altitude and geospatial tags. In an example commercially available tools such as Picarta (trade mark) or GeoSpy (trade mark) are used to compute geographical location depicted in the media item. In an example, a node of the graph may represent a geographical location.

At block 312, the media item is analyzed 312 to obtain metadata about a timestamp. A non-exhaustive list of metadata about a timestamp is: item creation date, the time in a video at which a given event occurs, item modification date, access time. The timestamp may be extracted from a manifest of the media item or found by observing when the media item is captured.

As previously mentioned, the metadata constructor 202 may use any suitable metadata extractor and/or any suitable method for metadata extraction in order to analyze and obtain metadata. Blocks 306, 308, 310, 312 may occur sequentially or in parallel. Blocks 306, 308, 310, 312 may also occur in any order and are not limited to the order depicted in FIG. 3.

At block 314, the metadata obtained in block 304 (and sub-blocks 306-312) are stored 314 by the metadata constructor 202.

At block 316, the media item is optionally labelled such as with a name of a person depicted in the media item or an identifier of an entity depicted in the media item. The label is an example of a type of metadata. In an example pixels of the media item are labelled such as by computing a bounding box around an entity depicted in the media item. In this case pixels are labelled as being within the bounding box or not.

For each media item the metadata (including the labels where applicable) are stored 316 in association with the media item.

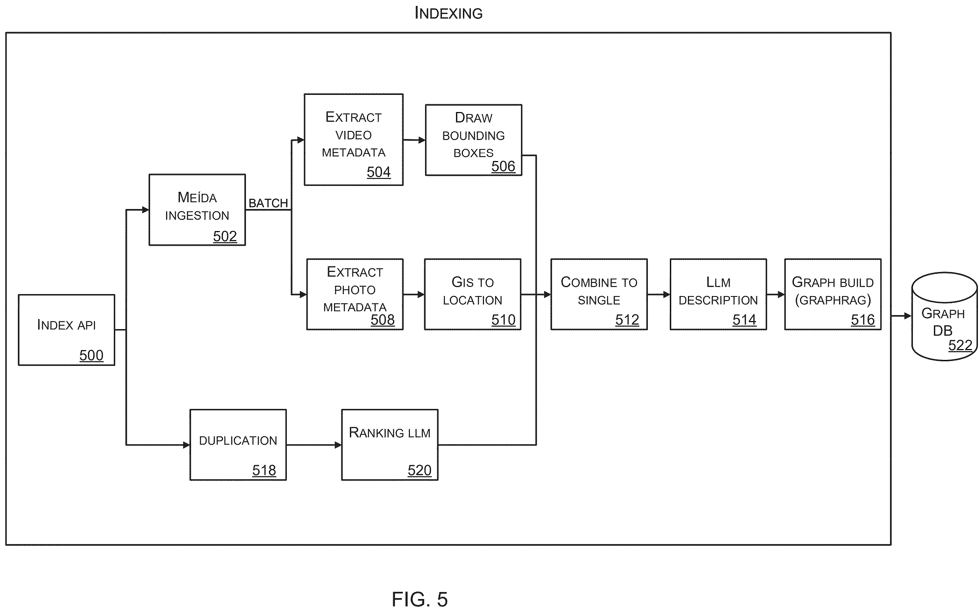

For each media item, a prompt may be constructed comprising the media item, the metadata of the media item, any labels of the media item and a request to compute a description of content depicted in the media item. The prompt is sent to an LLM such as that of FIG. 1 as described with more detail below with reference to FIG. 5. In response to the prompt the LLM returns a description of the content depicted in the media item.

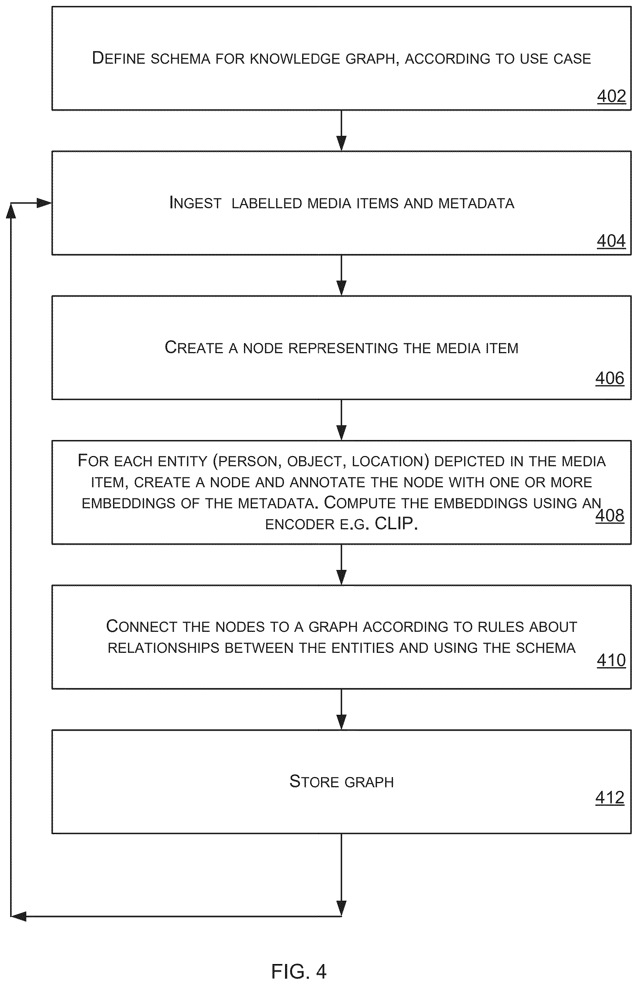

The media items, metadata, labels and descriptions are used by the graph constructor to construct the graph database. As mentioned above, the graph constructor 204 may use an LLM to construct the graph database. In another example the graph is constructed using a process such as that now described with reference to FIG. 4.

FIG. 4 is a flow diagram of an example method performed by the graph constructor 204 of the media item analysis tool 104 such as those of FIG. 2 and FIG. 1. At block 402, the graph constructor 204 defines 402 a schema for a graph database according to a use case. A schema is a blueprint that defines structure and relationships of a graph database and may differ between graph databases (i.e. if the use case of the media item analysis tool 104 changes, the metadata, entities and relationships between entities represented in the graph database benefit from having a schema bespoke for the use case). The graph constructor 204 may access a schema from a database of pre-built schemas, or alternatively the graph constructor may generate a schema. The graph constructor 204 may define a schema of the graph database and create the graph database according to the schema. In an example, the schema is defined automatically by selecting the schema from a database of schemas according to a type of content depicted in the media items.

At block 404, the graph constructor 204 ingests 404 a media item, metadata of the media item, any label of the media item and a description of content depicted in the media item.

At block 406, the graph constructor 204 creates 406 a node representing the media item. A node is a fundamental data structure that represents an entity or media item, and holds information about the entity it represents (also called annotations). For example, a node representing a person may contain the person's name, the person's ID number, the person's gender, the person's age. The information about the entity may be extracted from the metadata of the media item, or may be provided by the user (e.g. the name of a person may be provided by the user).

At block 408, for each entity (e.g. person, object, location) depicted in the media item, the graph constructor 204 creates 408 a node and annotates the node with one or more embeddings of the metadata. Annotating the node further comprises identifying from the embeddings of the metadata the embeddings associated with an entity corresponding to a node, and annotating using only the associated embeddings. Creating 408 a node may further comprise assigning a unique identifier to the node that distinguishes it from other nodes in the graph database. At the same time, or immediately following the creation and annotation of nodes representing entities in the media item, the embeddings of the metadata are computed by the encoder 208.

At block 410, the graph constructor 204 connects the nodes to a graph database according to rules about relationships between the entities and using the schema. In a graph database, connections between nodes are known as edges. The edges of nodes represent relationships between the nodes, and by extension relationships between the entities represented by the nodes. For example, nodes labelled "PERSON" and "LOCATION" may have an edge labelled "IS_AT" in between them, indicating the person is at the location and therefore identifying the relationship between the person and the location. Edges may be directional, meaning they only apply in one direction from one node to another. In the above example, the direction of the edge would go from "PERSON" to "LOCATION" as the opposite direction would be nonsensical. In some cases, an external user may manually review and edit nodes and the edges in a graph database.

At block 412, the graph constructor 204 stores the graph database. The graph database is stored in a graph database. Alternatively, the graph database may be stored on any suitable storage that allows the graph database to be accessed by the media item analysis tool 104. Examples of suitable storage mediums capable of storing a graph database and any other suitable storage include on-premise servers, external hard drives, private cloud storage, public cloud storage, data centers, network-attached storage.

The blocks of 404-412 are repeated for all media items ingested by the graph constructor 204. The graph constructor 204 may ingest all media items stored on a user-device 106 subject to permission from the user. Alternatively, the graph constructor 204 may ingest a subset of all media items stored on a user device 106 selected by the user. Additionally or alternatively, the graph constructor may ingest any subset of media items stored on other storage, such as an external cloud storage.

FIG. 5 is a flow diagram of an example method for collecting and processing metadata and constructing a graph database 522.

An index application programming interface API 500 is provided to enable other software processes to make calls to the process of FIG. 5

At 502, a batch of media items is ingested into the media item analysis tool 104. Once the batch is ingested into the media item analysis tool 104, it may be separately ingested by the components of the media item analysis tool 104 (e.g. by the metadata constructor in order to extract metadata from media, as represented by block 302 of FIG. 3). A batch of media items relates to a use case. For example, one batch of media may relate to an occurrence of crime, another batch of media may relate to government agency investigations and another batch may relate to a family holiday.

The following blocks 504-510 are repeated for each batch of media items. The batches of media items may be automatically retrieved by the media item analysis tool 104, or be manually input by a user using the media item analysis tool 104.

At blocks 518-520, the ingested media are deduplicated. The process of deduplication comprises identifying duplicate media items from the ingested media, and ranking the duplicate media according to a ranking criteria using the Large Language Model or other ranking process. The process of deduplication produces a highest-ranked media of the duplicate media items. Deduplicating by choosing a highest-ranked duplicate is an effective way of ensuring that when the graph database is queried, the highest-ranked or "best quality" duplicate of a media item can be automatically provided to a user without any further processing by the graph database. Not only does this produce higher-quality results from the media item analysis service, but also leads to faster and more efficient analysis. In the context of crime analysis, response time is a crucial factor when it comes to time-sensitive crimes such as kidnappings. For example, the police may use the media item analysis tool 104 to identify all points within a video where a suspect is seen with a kidnapped victim, and to identify the location of the suspect at each of those points in the video in order to create a map of the suspect's movement. A faster analysis improves the likelihood that the suspect is apprehended. Alternatively, other media item analysis tools that do not implement ranking may also provide a faster analysis, but at the expense of image quality. In the example above, if a low-resolution video or a video where a suspect's face is covered/non-identifiable is chosen by a media item analysis tool that doesn't implement ranking, then the suspect may not be apprehended.

At blocks 508, the metadata of each photo within a batch of the ingested media items is extracted using the method outlined by FIG. 3. Block 510 is an optional extension to the process of metadata extraction, and comprises extracting a physical location from a Geographic Information System (GIS).

At block 504, the metadata of each video within a batch of the ingested media items is extracted using the method outlined by FIG 3. At block 506, bounding boxes may be drawn around the faces of people and any other entities with names (e.g. pets, cartoon figures), and the bounding boxes are colored such that each bounding box within a single video is of a different color. Although bounding boxes and the use of color as an identifier have been used in this example, in other examples any other method of highlighting and entity identification may be used; in another example, bounding circles are drawn with varying thickness as an identifier. Drawing bounding boxes improves the ability of the LLM to provide an accurate description of entities within a media item by allowing the LLM to assign a name to an entity represented by a bounding box of a given color. For example, drawing a green bounding box around a man in an image, and assigning the "green box" to "John" in addition to drawing a red box around a child in the image and assigning the "red box" to "Adam", allows the LLM to produce descriptions such as "John [green] is wearing a grey jumper and prescription lenses, and is carrying his son Adam [red] on his shoulders, who is wearing a white coat and a hat" and any other such description. In the context of the media item application detailed in paragraph 52, drawing a bounding box around a suspect may allow for the suspect to be more easily identified in any subsequent images and/or frames of a video. Producing more detailed descriptions with names assigned to entities, allows for more detailed as well as more relationships to be identified within the graph database of the image.

Although not shown in FIG. 5, metadata may also extracted from any other alternative media formats, such as GIFs and text documents. And although not shown in FIG. 5, a physical location from a GIS may be extracted from videos in addition to photos, and bounding boxes may be drawn around entities in photos in addition to videos.

The threads in the method of FIG. 5 represented by boxes 504 and 506, 508 and 510 as well as 518 and 520 run in parallel to each other. Using a parallelized architecture in this manner is found to be particularly effective in reducing latency. In other examples, the threads may run sequentially.

At block 512, information for a single de duplicated media item is collated into a prompt together with a request for a description of content depicted in the media item.

At block 514, the prompt is fed into Large Language Model 108. The Large Language Model 108 returns a description of content depicted in the media item. The description of each media item provided by the Large Language Model 108 may be a natural-language description. Operations 512 and 514 are repeated for each de-duplicated media item.

At block 516, the description of each media item in the batch of media items is provided to the graph constructor 204 together with references to the media items, the metadata and the labels. In the example of FIG. 5, the graph constructor 204 is GraphRAG or any other graph construction technology. GraphRAG outputs a graph database of the batch of media items, and at block 522 the graph database of the batch of media items is stored in a graph database. Note that in this example the graph database is stored in a graph database but as previously detailed may be stored in any suitable storage mechanism.

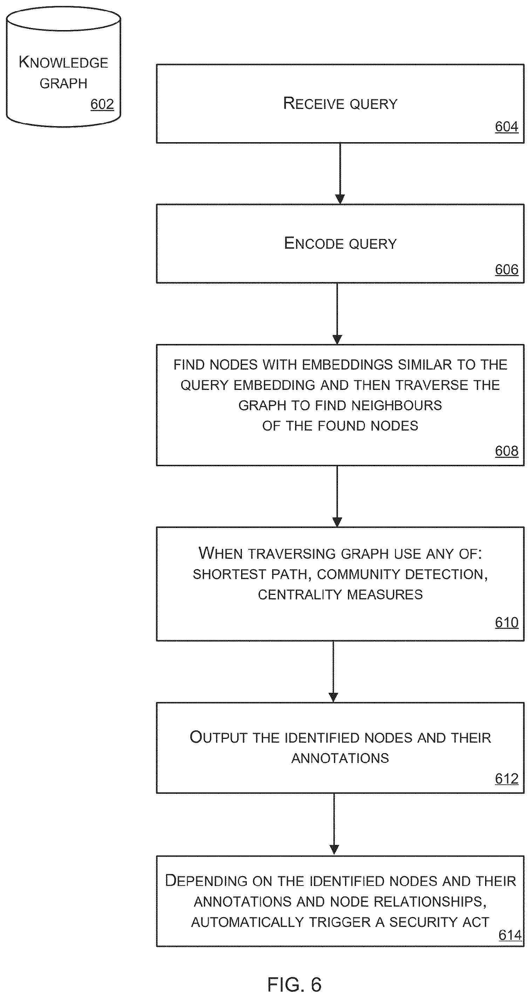

FIG. 6 is a flow diagram of an example method for querying a graph database using a media item analysis tool. In block 604, the graph query engine 206 of the media item analysis tool 104 receives 604 a query. The query may be received via a user interface of the media item analysis tool 104.

At block 606, the graph query engine 206 instructs the encoder 208 to encode 606 the query into a query embedding. The query embedding is a representation of the query in a continuous vector space. At block 608, the graph query engine finds 608 in the graph database embeddings similar to the query embedding, and traverses the graph database to find neighbors of the found nodes. In this context 'similar' refers to the distance between two embeddings in the embedding space; a smaller distance implies greater similarity. In the graph database, 'neighbors' of a node refer to nodes that are connected to that node via a single edge (i.e. nodes that have a direct relationship with that node). Upon finding 408 nodes with similar embeddings, the graph query engine 206 extracts the annotations associated with the found nodes.

At 610, when traversing the graph database, the graph query engine 206 may deploy graph traversal methods in order to search through the graph database, find paths between nodes of the graph database, identify cycles within a graph database, identify clusters or groups within the graph database or to identify key nodes within the graph database. Examples of graph database traversal methods include shortest path detection, community detection and the use of centrality measures. Further query methods implemented by the graph query engine 206 include Text2Cypher, GraphRAG Global Search and GraphRAG Local Search in conjunction with Text2Cypher.

At 612, the graph query engine 206 outputs 612 nodes and the annotations associated with the nodes found in block 608. Before being presented to a user, the nodes and their annotations may be converted to natural-text. The nodes and their annotations may be presented to a user via the user interface of the media item analysis tool 104. The nodes and the annotations which are output at operation 612 may be used to form a prompt. The prompt comprises a request to generate an answer to the query (received at operation 604) in natural language text and in a form easily readable by a user. The prompt also comprises the output from output operation 612 (i.e. the nodes and annotations output by the graph query engine). The prompt is sent to a Large Language Model which returns an answer (referred to as a final answer) to the query in natural language text and in a form easily readable by a user.

At 614 (which is optional), depending on the identified nodes and their annotations, and/or on the final answer, the graph query engine 206 automatically triggers 614 an action. In one example, the user's query received 604 by the graph query engine 206 relates to media item analysis. One example of such media item analysis may be to identify a suspect committing a crime, and the corresponding user query may be to "identify a shoplifter and timestamps in a series of videos at which the shoplifter is stealing items from a shop". In such an example, the nodes and their annotations identified by the graph query engine 206 will relate at least to entities identified in the video and timestamps at which the entity is identified and/or performing the act of stealing from a shop. In this example, the triggered 614 action may be informing relevant authorities of the timestamps, the identified entities in the video. Additionally or alternatively, the graph query engine 206 provides the identified nodes and their annotations to the chatbot 200 such that the nodes and their annotations are presented to a user of the media item analysis tool 104 via a user interface as a chatbot 200 output before automatically triggering an action. In other embodiments, the graph query engine 206 may recommend to a user of the media item analysis tool 104 suggested actions instead of automatically triggering an action. In other embodiments, the graph query engine 206 may only provide the identified nodes and their annotations to the chatbot 200 such that the nodes and their annotations are presented to a user of the media item analysis tool 104 via a user interface as a chatbot 200 output without any actions being automatically triggered or recommended to the user; in such a scenario, the user would manually trigger a media item act from the information received from the chatbot 200 output.

The act that is automatically triggered or recommended to a user may relate to any use case of the media item analysis tool 104. For example, the act may be to send a regulatory compliance audit to a regulatory body, to publish a story to a social media platform, to send a report of internal investigations of employee misconduct to a Human Resources department of a company, to isolate a node of a communications network, to close access to a service and any other relevant act.

FIG. 7 is an example schema of a graph database such as those of FIGs 4-6. In this example, the schema includes nodes of class "person", "image", "object", "date", "location", "event", "place", "city" and "country". The nodes of class "person" have associated annotations "ID", "name", "gender" and "age". As represented in FIG. 7, in the case there are two nodes of the same class, each node of the same class may be assigned a unique identifier; in FIG. 7 there are two instances of a node of class "person", and they are assigned the unique identifiers "person1" and "persons2".

In this example, edges between nodes include edges (or relationships) of types "relation", "appears in", "contains", "created on", "occurs on", "happens at", "taken at", "occurred in", "located in", "part of" and "belongs to". Edges may have further information associated with them; for example, the edge between the node with the unique identifier "person1" and the node of class "image" contains further information linking the "person" to the "image". This edge further details "position", "clothing", "pose", "activity", "gesture" and "facial expression".

In this example, the directionality of the edges is represented by an arrow. For example, the edge between the nodes "person2" and "image" only applies from "person2" to "image" and not vice versa. In this example, there exist also non-directional edges. For example, the edge "relation" connecting nodes with unique identifiers "person1" and "person2" applies in both directions.

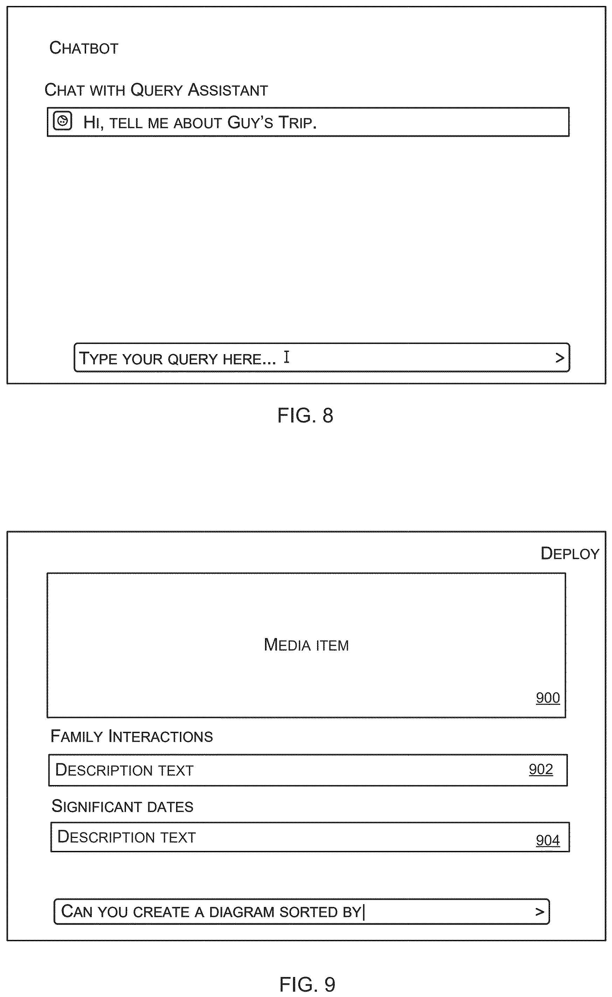

FIG. 8 shows an example user interface of the media item analysis tool 104 for enabling a user query input. The example user interface of FIG. 8 facilitates communication with the chatbot 200 of the media item analysis tool 104. The user interface facilitating communication with the chatbot 200 comprises a chat window and an input field. The chat window is where the messages to and from the chatbot are displayed. For example, in the example of FIG. 8, a user has typed "Hi, tell me about Guy's trip" which is then displayed in the chat window. Any further responses from the chatbot and messages from the user will be sequentially displayed in the chat window. In this example, the input field is placed at the bottom of the user interface and allows for a text input from the user. Inputs from the user using the input field are user inputs and contain user queries, and are processed as set out in the methods of 3-6. In another example, the input field may also contain options for a voice input, a media input or inputs of any other modality. Though the chat window only contains text in the example of FIG. 8, it must be noted that it can display any modality including videos and images provided by the chatbot 200 as a response to a user query.

FIG. 9 shows an example user interface of the media item analysis tool 104. The user interface of FIG. 9 facilitates communication between a user and the chatbot 200, with the user interface comprising a chat window and an input field comparable to those of FIG. 8 and having the same capabilities. In this example, the chatbot 200 has provided a response to the user input of FIG. 8 ("Hi, tell me about Guy's trip") with the response comprising a media item 900, a text description 902 of family interactions relating to the media item 900, and a text description 904 of significant dates relating to the media item 900. The media item 900 in this case is from "Guy's trip" and the text descriptions of the family interactions 902 and significant dates 904 are text descriptions relating to "Guy's trip" represented by the media item 900. While this example is limited to descriptions of family interactions and significant dates, it must be noted that as disclosed in previous examples, the chatbot 200 is able to provide any detail from the media item. For example, the user may ask the chatbot 200 to analyze a video and to "Please count the number of people that enter and leave the store between the hours of 08:00 and 17:00 while spending less than 2 minutes inside" as a method of crime detection. The text description of family interactions 902 and the text description 904 of the significant dates may be combined to be written as a "story". In this example, the story will comprise family interactions in the image from "Guy's trip" sorted in a chronological manner; for example, the story may read "The entire family entered an amusement park at 09:00. At 9:10, Guy and his son went on a rollercoaster ride while Guy's wife and his daughter went on a Ferris wheel". In this example, there is a partially-written user input in the input field.

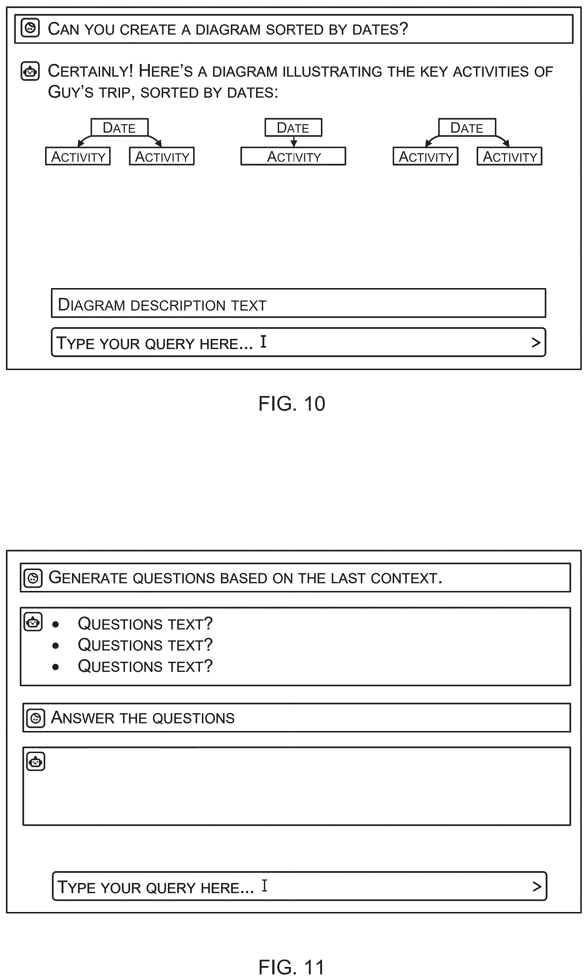

FIG. 10 is an example user interface of the media item analysis tool 104. The example user interface comprises a chat window and an input field such as those of FIGs 8-9. In this example, the user has entered a user input of "Can you create a diagram sorted by dates?" as a query to the chatbot 200 response of FIG. 9. The chatbot 200 has provided a response comprising text and a visual diagram of dates and activities corresponding to the dates of Guy's trip.

FIG. 11 is an example user interface of the media item analysis tool 104. The example user interface comprises a chat window and an input field such as those of FIGs 8-10. In this example, the user has entered a user input of "Generate questions based on the last context" as a query to the chatbot 200 response of FIG. 10. The chatbot 200 has provided a list of questions relating to "Guy's trip" and the dates and activities of the trip. The user has entered as a second user input "Answer the questions", prompting the chatbot to answer the questions it provided as a response to the previous user query.

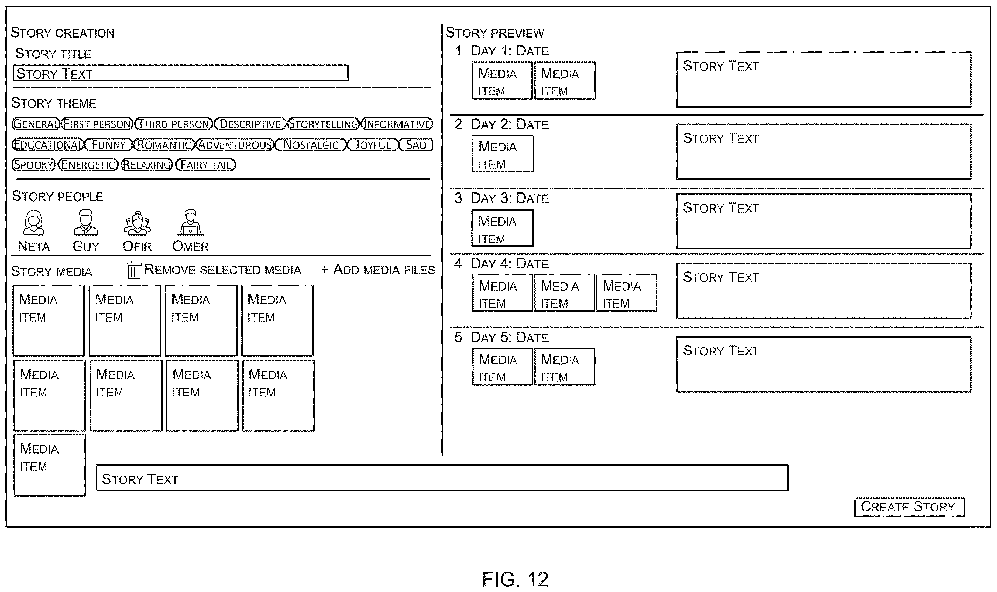

FIG. 12 is an example story telling interface of the user interface of the media item analysis tool 104. The story telling interface has functionality to create story-like text of media files ingested by the media item analysis tool 104 display the text with media items from the media files. In this example, the story telling interface comprises an option for a user to input a story title, to choose a story theme from a list of predetermined themes, to choose the people and other entities described in the story, to tag people in the story and to choose media items from which the story is to be told. The story telling interface further has functionality to provide a preview of a story. On the right hand column of FIG. 12, a story preview is provided by the story telling interface, where media items are separated based on date of occurrence and a story text is provided by the story telling interface describing the media. In this example, the story is chronological, though it must be noted that the story and the preview of the story may be sorted in any order, or may not be ordered.

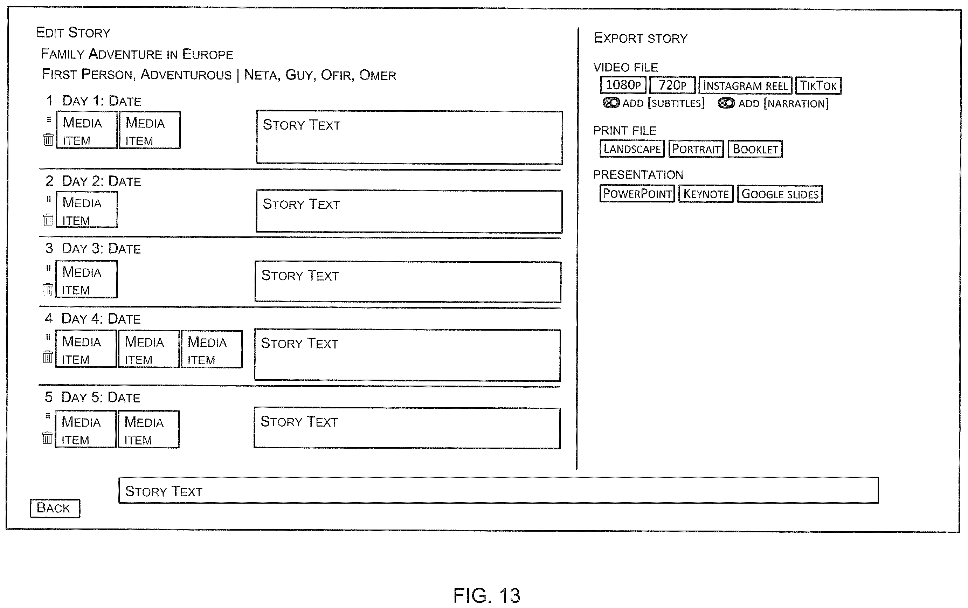

FIG. 13 is an example story telling interface of the user interface of the media item analysis tool 104. FIG. 13 illustrates an example edit mode of the story telling interface. The edit mode of the story telling interface has functionality to, upon providing a preview of a story as detailed in FIG. 12, allow a user to edit and export the story. Editing a story may comprise implementing a proofreading tool, manually amending story text provided by the story telling interface wherein the amending may be done automatically or manually by a user, formatting story text, restructuring story text, removing and/or adding media items to a story, adding interactive elements to the story, adjusting the color of media items, removing background noise from media items, or any other suitable media and text editing techniques. The edit mode of the story telling interface has further functionality to export the story. Exporting the story comprises exporting as a video file, exporting as a document and optionally printing the document, exporting as a presentation, exporting as an audio file and any other suitable exporting format. In the case of exporting as a video file, the story telling interface has functionality to allow a user to select video resolution, video platform (e.g. Instagram (trade mark), TikTok (trade mark)). The story telling interface also has functionality to allow a user to select a format of any other method of exporting a story (e.g. for exporting as a presentation, a user may choose a Microsoft PowerPoint (trade mark) presentation, a Keynote (trade mark) presentation or a Google (trade mark) slides presentation).

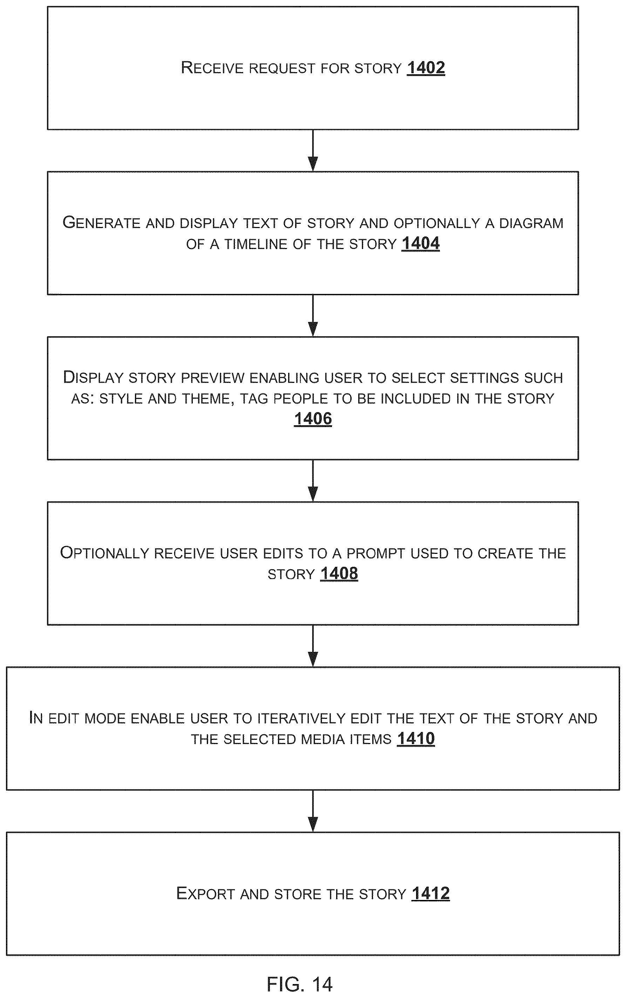

FIG. 14 is a flowchart of an exemplary method of generating and exporting a story according to a user request using the story telling interface of the media item analysis tool 104. At block 1402, the media item analysis tool 104 receives 1402 a request for a story. The request for a story may be received 1402 via the input field of the story telling interface of the media item analysis tool 104. The request for a story may be in a text format, a document format or any other format that is able to convey the request for a story to the media item analysis tool 104. The request for a story may be received 1402 from a human user, a computer or any other entity capable of sending a request for a story. At block 1404, the media item analysis tool 1404 generates 1404 and displays text of the story and optionally a diagram of a timeline of the story. The information required to generate text of the story and a diagram of a timeline of the story is retrieved from the graph database like that of previous figures. The steps of generating text and a diagram of a timeline of the story is performed according to the methods of graph database creation, graph database querying and graph database traversal as described in FIGs 4-6. Although block 1404 mentions generating and displaying only a text of the story and a diagram of a timeline of the story, it must be noted that the media item analysis tool 104 has functionality to generate and display any other form of media representative of the story such as interactive media (e.g. polls), charts, graphs.

At block 1406, the media item analysis tool 104 displays 1406 a story preview enabling the user to select settings such as style and theme and to tag people to be included in the story. Style and theme may include options such as "first person" and "third person" which determine the perspective in which the story is told, or "joyful", "sad", "spooky" and "energetic" which determine the language and vocabulary used when generating the story. At the optional block 1408, the media item analysis tool 104 receives 1408 user edits to a prompt used to create the story. The prompt used to create the story may be a user prompt. Once the media item analysis tool receives 1408 the user edits, it may re-generate the story.

At block 1410, the media item analysis tool 104 in edit mode enables the user to iteratively edit the text of the story and the selected media items. As mentioned in the above sections, iteratively editing a story may comprise implementing a proofreading tool, manually amending story text provided by the story telling interface wherein the amending may be done automatically or manually by a user, formatting story text, restructuring story text, removing and/or adding media items from/to a story, adding interactive elements to the story, adjusting the color of media items, removing background noise from media items, or any other suitable media and text editing techniques.

At block 1412, the media item analysis tool 104 exports and stores 1412 the story. As mentioned in the above sections, exporting the story comprises exporting as a video file, exporting as a document and optionally printing the document, exporting as a presentation, exporting as an audio file and any other suitable exporting format. In the case of exporting as a video file, there exists the functionality to allow a user to select video resolution, video platform. The story may be stored 1412 in local storage on a user's device or external drives, in cloud storage on a local or private cloud, in database storage such as SQL databases as well as any other suitable storage. The story may be stored in an in-app storage such that it is accessible via the media item analysis tool 104.

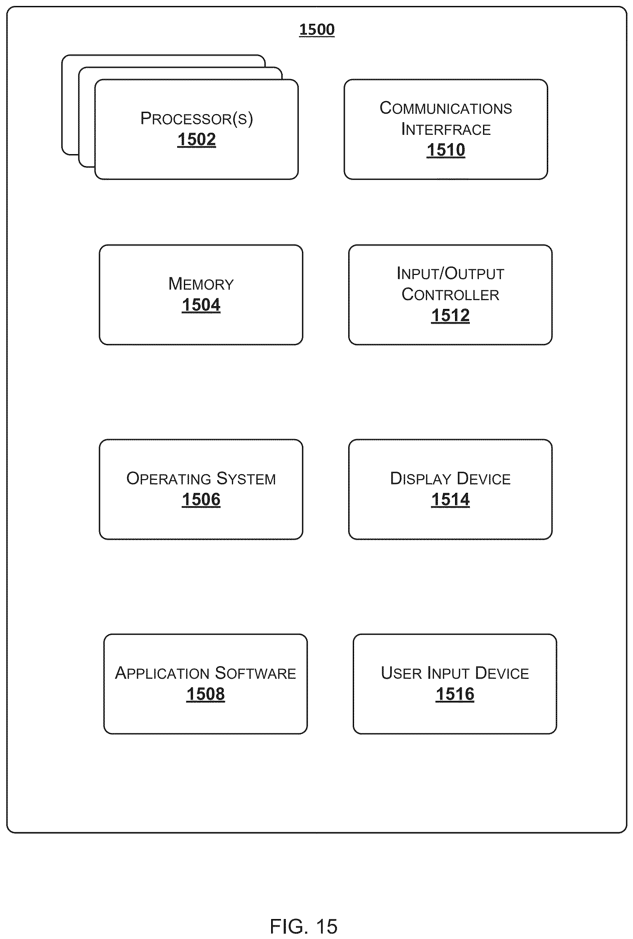

FIG. 15 illustrates various components of an exemplary computing-based device 1500 which are implemented as any form of a computing and/or electronic device, and in which embodiments of a media item analysis tool 104 are implemented in some examples. In some examples, the computing-based device 1500 is a general-purpose computer that is activated or reconfigured by a computer program stored in the computer. In other examples the computing-based device is specially constructed for the intended purpose.

Computing-based device 1500 comprises one or more processors 1502 which are microprocessors, controllers or any other suitable type of processors for processing computer executable instructions to control the operation of the device in order to execute and run the media item analysis tool 104.

The processors 1502 may include at least one general-purpose processing device such as a central processing unit, microprocessor, complex instruction set computing (CISC) microprocessor, reduced instruction set computing (RISC) microprocessor, or other general-purpose processing device. In some examples, for example where a system on a chip architecture is used, the processors 1502 include one or more special-purpose processing device such as a fixed function block (also referred to as an accelerator) which implements a part of the method of media item analysis in hardware (rather than software or firmware). The special-purpose processing device may be configured to execute instructions for performing the operations and methods described herein. Platform software comprising an operating system 1506 or any other suitable platform software is provided at the computing-based device to enable application software 1508 to be executed on the device.

The computer executable instructions are provided using any computer-readable media that is accessible by computing based device 1500. Computer-readable media includes, for example, computer storage media such as memory 1504 and communications media. Computer storage media, such as memory 1504, includes volatile and non-volatile, removable and non-removable media implemented in any method or technology for storage of information such as computer readable instructions, data structures, program modules or the like. Computer storage media includes, but is not limited to, random access memory (RAM), read only memory (ROM), erasable programmable read only memory (EPROM), electronic erasable programmable read only memory (EEPROM), flash memory or other memory technology, compact disc read only memory (CD-ROM), digital versatile disks (DVD) or other optical storage, magnetic cassettes, magnetic tape, magnetic disk storage or other magnetic storage devices, or any other non-transmission medium that is used to store information for access by a computing device. In contrast, communication media embody computer readable instructions, data structures, program modules, or the like in a modulated data signal, such as a carrier wave, or other transport mechanism. As defined herein, computer storage media does not include communication media. Therefore, a computer storage medium should not be interpreted to be a propagating signal per se. Although the computer storage media (memory 1504) is shown within the computing-based device 1500 it will be appreciated that the storage is, in some examples, distributed or located remotely and accessed via a network or other communication link (e.g. using communication interface 1510).

The computing-based device 1500 also comprises an input/output controller 1512 arranged to output display information to a display device 1514 which may be separate from or integral to the computing-based device 1500. The display information may provide a graphical user interface. The input/output controller 1512 is also arranged to receive and process input from one or more devices, such as a user input device 1516 (e.g. a mouse, keyboard, camera, microphone or other sensor). In some examples the user input device 1516 detects voice input, user gestures or other user actions and provides a natural user interface (NUI). This user input may be used to perform security analysis. In an embodiment the display device 1514 also acts as the user input device 1516 if it is a touch sensitive display device. The input/output controller 1512 outputs data to devices other than the display device in some examples, e.g. a locally connected printing device (not shown in FIG. 15).

Any of the input/output controller 1512, display device 1514 and the user input device 1516 may comprise NUI technology which enables a user to interact with the computing-based device in a natural manner, free from artificial constraints imposed by input devices such as mice, keyboards, remote controls and the like. Examples of NUI technology that are provided in some examples include but are not limited to those relying on voice and/or speech recognition, touch and/or stylus recognition (touch sensitive displays), gesture recognition both on screen and adjacent to the screen, air gestures, head and eye tracking, voice and speech, vision, touch, gestures, and machine intelligence. Other examples of NUI technology that are used in some examples include intention and goal understanding systems, motion gesture detection systems using depth cameras (such as stereoscopic camera systems, infrared camera systems, red green blue (rgb) camera systems and combinations of these), motion gesture detection using accelerometers/gyroscopes, facial recognition, three dimensional (3D) displays, head, eye and gaze tracking, immersive augmented reality and virtual reality systems and technologies for sensing brain activity using electric field sensing electrodes (electro encephalogram (EEG) and related methods).

Alternatively or in addition to the other examples described herein, examples include any combination of the following clauses.

Clause A. A computer-implemented method, comprising: ingesting into a memory a batch of media items; identifying, for a media item of the batch of media items, duplicate media items in the batch; for each duplicate media item, ranking the duplicate media item with respect to duplicates of the media item; filtering the duplicate media items based on the ranks of the duplicate media items to obtain filtered media items; computing metadata of individual ones of the filtered media items; labelling individual ones of the filtered media items with part of the metadata; for each filtered media item having metadata and a label, inputting into a Large Language Model, LLM, the media item, the label, the metadata and a request, and receiving from the LLM a description of content depicted in the media item; and
creating a graph database of the filtered media items using the descriptions, the metadata, and the labels.

Clause B. The method of clause A, wherein the ranking is performed by a LLM.

Clause C. The method of any preceding clause, wherein the ranking of the duplicate media items is done in parallel to computing the metadata.

Clause D. The method of any preceding clause wherein a label labels individual pixels of a media item.

Clause E. The method of clause D, wherein a label comprises a bounding box around an entity depicted in a media item and an identifier of the entity.

Clause F. The method of any preceding clause, comprising: receiving a query; converting the query into a graph database query language of the graph database; executing the converted query on the graph database; in response to the executing, receiving a response comprising media items, metadata or descriptions; forming a prompt comprising the response; prompting a Large Language Model using the prompt; receiving content from the Large Language Model in response to the prompt

Clause G. The method of clause F, comprising: determining an action to be taken by applying a rule to the response.

Clause H. The method of clause G, comprising: automatically triggering the action.

Clause I. The method of clauses G-H, wherein the action wherein the action is a security action comprising at least one of: closing an account, isolating a communications network node, reporting suspicious activity to the origin of the batch of media items, identifying a secondary entity, compiling a security report, calling emergency services, creating a timeline of actions.

Clause J. The method of clauses F-I, wherein the method further comprises: generating a user interface; displaying the response at the user interface; receiving edits to the response via the user interface; forming a retrieval augmented generation prompt using the response and the edits and prompting the LLM using the prompt.

Clause K. The method of clause J, wherein the user interface is configured to provide a storytelling service, further wherein the storytelling service is configured to: receive a request for a story about the media items; generate and display text and media items of the story and optionally a diagram of a timeline of the story, wherein the media items of the story are selected from the graph database; display a preview of the story; using the preview, receive and implement changes to story settings; export and store the story.

Clause L. The method of clause J, wherein the user interface is configured to provide a security analysis service, and wherein: the query is a request for security analysis; the response comprises descriptions and media items of a security event and a diagram of a timeline of the security event; display a preview of a security analysis computed using the response; receive changes to security analysis settings; recompute the security analysis; export and store the recomputed security analysis.

Clause M. The method of clause J, wherein the user input comprising the query is related to at least one of: whistleblower investigations, investigations of employee misconduct, regulatory compliance audits, corporate due diligence investigations, forensic accounting, legal investigations, crime analysis, regulatory agency investigations and public relations crisis management.

Clause N. The method of any preceding clause, comprising defining a schema of the graph database and creating the graph database according to the schema.

Clause O. The method of clause N, comprising defining the schema by selecting the schema from a database of schemas according to a type of content depicted in the media items.

Clause P. The method of any preceding clause, wherein the metadata comprises at least one of: a timestamp, a person, a location, a video transcription, file name, duration, time zone, global positioning system GPS co-ordinates, altitude, device type, device identifier ID, camera settings, resolution, version, editing history or geospatial tags.

Clause Q. An apparatus comprising: a processor; a memory storing instructions that, when executed by the processor, perform a method comprising: ingesting a batch of media items into memory; identifying, for a media item of the batch of media items, duplicate media items in the batch; for each duplicate media item, ranking the duplicate media item with respect to duplicates of the media item; filtering the duplicate media items based on the ranks of the duplicate media items to obtain filtered media items; computing metadata of individual ones of the filtered media items; for each filtered media item having metadata, inputting into a Large Language Model, LLM, the media item, the metadata and a request, and receiving from the LLM a description of content depicted in the media item; and creating a graph database of the filtered media items using the descriptions and the metadata, .

Clause R. The apparatus of clause Q, wherein the method performed by the instructions further comprises; defining a schema of the graph database and creating the graph database according to the schema, wherein the schema is bespoke to a downstream process comprising the graph database.

Clause S. The apparatus of clause R, wherein the schema is selected from a database of schemas according to the metadata.

Clause T. A computer storage medium having computer-executable instructions that, when executed by a computing system, direct the computing system to perform operations comprising: ingesting a batch of media items; identifying, for a media item of the batch of media items, duplicate media items in the batch; for each duplicate media item, ranking the duplicate media item with respect to duplicates of the media item; filtering the duplicate media items based on the ranks of the duplicate media items to obtain filtered media items; computing metadata of individual ones of the filtered media items; labelling individual ones of the filtered media items with part of the metadata; for each filtered media item having metadata and a label, inputting into a Large Language Model, LLM, the media item, the label, the metadata and a request, and receiving from the LLM a description of content depicted in the media item; and creating a graph database of the filtered media items using the descriptions, the metadata, and the labels.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

The methods herein, which involve the observation of people in their daily lives, may and should be enacted with utmost respect for personal privacy. Accordingly, the methods presented herein are fully compatible with opt-in participation of the persons being observed. In embodiments where personal data is collected on a local system and transmitted to a remote system for processing, that data can be anonymized in a known manner. In other embodiments, personal data may be confined to a local system, and only non-personal, summary data transmitted to a remote system.

## Claims

1. A computer-implemented method, comprising:
ingesting into a memory a batch of media items (100);
identifying, for a media item of the batch of media items (100), duplicate media items in the batch;
for each duplicate media item, ranking the duplicate media item with respect to duplicates of the media item;
filtering the duplicate media items based on the ranks of the duplicate media items to obtain filtered media items;
computing metadata of individual ones of the filtered media items;
labelling individual ones of the filtered media items with part of the metadata;
for each filtered media item having metadata and a label, inputting into a Large Language Model, LLM (108), the media item, the label, the metadata and a request, and receiving from the LLM (108) a description of content depicted in the media item; and
creating a graph database of the filtered media items using the descriptions, the metadata, and the labels.

2. The method of claim 1, wherein the ranking is performed by a LLM.

3. The method of claim 1 or claim 2, wherein the ranking of the duplicate media items is done in parallel to computing the metadata.

4. The method of any preceding claim wherein a label labels individual pixels of a media item or wherein a label comprises a bounding box around an entity depicted in a media item and an identifier of the entity.

5. The method of any preceding claim, comprising:
receiving a query;
converting the query into a graph database query language of the graph database;
executing the converted query on the graph database;
in response to the executing, receiving a response comprising media items, metadata or descriptions;
forming a prompt comprising the response;
prompting a Large Language Model using the prompt;
receiving content from the Large Language Model in response to the prompt

6. The method of claim 5, comprising:
determining an action to be taken by applying a rule to the response, wherein the action is a security action comprising at least one of: closing an account, isolating a communications network node, reporting suspicious activity to the origin of the batch of media items, identifying a secondary entity, compiling a security report, calling emergency services, creating a timeline of actions.

7. The method of claim 5, wherein the method further comprises:
generating a user interface;
displaying the response at the user interface;
receiving edits to the response via the user interface;
forming a retrieval augmented generation prompt using the response and the edits and prompting the LLM using the prompt.

8. The method of claim 7, wherein the user interface is configured to provide a security analysis service, and wherein:
the query is a request for security analysis;
the response comprises descriptions and media items of a security event and a diagram of a timeline of the security event;
display a preview of a security analysis computed using the response;
receive changes to security analysis settings;
recompute the security analysis;
export and store the recomputed security analysis.

9. The method of claim 5, comprising determining an action to be taken by applying a rule to the content received from the Large Language Model in response to the prompt, and automatically triggering the action.

10. The method of any preceding claim, comprising defining a schema of the graph database and creating the graph database according to the schema.

11. The method of claim 10, comprising defining the schema by selecting the schema from a database of schemas according to a type of content depicted in the media items.

12. The method of any preceding claim, wherein the metadata comprises at least one of: a timestamp, a person, a location, a video transcription, file name, duration, time zone, global positioning system GPS co-ordinates, altitude, device type, device identifier ID, camera settings, resolution, version, editing history or geospatial tags.

13. An apparatus comprising:
a processor;
a memory storing instructions that, when executed by the processor, perform a method comprising:
ingesting a batch of media items (100) into memory;
identifying, for a media item of the batch of media items (100), duplicate media items in the batch;
for each duplicate media item, ranking the duplicate media item with respect to duplicates of the media item;
filtering the duplicate media items based on the ranks of the duplicate media items to obtain filtered media items;
computing metadata of individual ones of the filtered media items;
for each filtered media item having metadata, inputting into a Large Language Model, LLM (108), the media item, the metadata and a request, and receiving from the LLM (108) a description of content depicted in the media item; and
creating a graph database of the filtered media items using the descriptions and the metadata.

14. The apparatus of claim 13, wherein the method performed by the instructions further comprises;
defining a schema of the graph database and creating the graph database according to the schema, wherein the schema is bespoke to a downstream process comprising the graph database.

15. The apparatus of claim 14, wherein the schema is selected from a database of schemas according to the metadata.
